# EUROPÄISCHE PATENTSCHRIFT

(11) **EP 0 482 316 B1**
(45) Veröffentlichungstag und Bekanntmachung des Hinweises auf die Patenterteilung: **22.02.1995**
(21) Anmeldenummer: 91114398.0
(22) Anmeldetag: 28.08.1991
(51) Int. Cl.: A01D 33/04, A01D 17/10

(54) **Kartoffelerntemaschine**
Potatoharvester
Récolteuse de pommes de terre

(30) Priorität: 26.10.1990 DE 9014768 U
(43) Veröffentlichungstag der Anmeldung: 29.04.1992
(73) Patentinhaber: Maschinenfabrik Niewöhner GmbH & Co. KG, D-4830 Gütersloh 1 (DE)
(72) Erfinder: Niewöhner, Bruno, Jr., W-4830 Gütersloh (DE); Pickert, Heinz, W-4835 Rietberg 1 (DE)
(74) Vertreter: Patentanwälte Dipl.-Ing. Bodo Thielking Dipl.-Ing. Otto Elbertzhagen

(56) Entgegenhaltungen:
- DE-A- 2 840 631
- FR-A- 2 403 837
- US-A- 4 392 533

## Beschreibung

Die Erfindung betrifft eine Kartoffelerntemaschine mit einer im Anschluß an eine Schwadaufnahmeeinrichtung nach hinten verlaufenden, ansteigenden Sieb- und Förderkette, ferner mit einer der Sieb- und Förderkette nachgeschalteten Krautkette, deren oberes Trum ebenfalls nach hinten aufsteigend umläuft, wobei die Krautkette ein quer verlaufendes Trennband umläuft, das Schmutz und Kraut zur Seite fördert und die Kartoffeln auf ein nach vorne verlaufendes Förder- und Verleseband übergibt, das die Kartoffeln in einen Sammelbehälter oder auf ein Abführband transportiert, wobei das Trennband aus zwei gegenläufigen, von der Mitte zu den Seiten fördernden Trennbandabschnitten besteht, die zum Abwurf der Beimengungen zu unterschiedlichen Seiten der Maschine und zur Übergabe der Kartoffeln auf jeweils sich anschließende, von hinten nach vorn verlaufende Förder- und Verlesebänder ausgebildet sind.

Bei einer bekannten Erntemaschine dieser Art (US-A-4,392, 533) sind zwischen den beiden gegenläufigen Trennbandabschnitten zwei ebenfalls gegenläufige Rotationskörper mit scheibenförmigen Bereichen angeordnet, deren Drehachsen quer zur Förderrichtung der Trennbandabschnitte verlaufen. Die Scheiben sind sämtlich axial mit Abständen von annähernd 1'' angeordnet. Die Rotationskörper sollen zur weiteren Entfernung von kleinen Beimengungsteilchen dienen und das verbleibende Erntegut über die gesamte Breite der Rotationseinrichtung verteilen.

Ausgehend von diesem Stand der Technik liegt der Erfindung die Aufgabe zugrunde, eine derartige Kartoffelerntemaschine so auszubilden, daß eine besonders wirksame Trennung zwischen Beimengungen und Kartoffeln erreicht wird.

Die Lösung dieser Aufgabe erfolgt dadurch, daß jedem Trennbandabschnitt eine oberhalb des Trennbandes angeordnete Abstreifvorrichtung zugeordnet, welche zwei Reihen von umlaufend angeordneten Mitnehmern aufweist, deren zur Maschinenmitte hin weisende Reihe in Draufsicht schräg von vorn außen nach hinten innen bewegt wird.

Derartige Abstreifvorrichtungen in der erfindungsgemäßen Anordnung haben den Vorteil, daß sie zu einer besonders wirksamen Trennung zwischen Kartoffeln und Beimengungen beitragen. Die Trennwirkung der Trennbandabschnitte wird erfindungsgemäß dadurch gesteigert, daß sowohl das Trennband als auch die Abstreifvorrichtung in der Seitenansicht in Richtung auf das hintere Ende der Kartoffelerntemaschine ansteigend geneigt sind.

Dabei erweist es sich als besonders zweckmäßig, daß erfindungsgemäß die Neigung der Abstreifvorrichtung und des Trennbands im wesentlichen gleich sind.

Eine weitere Unterstützung der Trennwirkung erfolgt dadurch, daß erfindungsgemäß die fördernden Trums der Trennbandabschnitte zu den Seiten hin ansteigend angeordnet sind.

Schließlich wird erfindungsgemäß noch vorgeschlagen,daß die fördernden Trums der Trennbandabschnitte an der Maschinenseite stärker ansteigend angeordnet sind als in der Maschinenmitte.

Nachstehend werden bevorzugte Ausführungsformen der Erfindung anhand der Zeichnung im einzelnen beschrieben. Es zeigen:

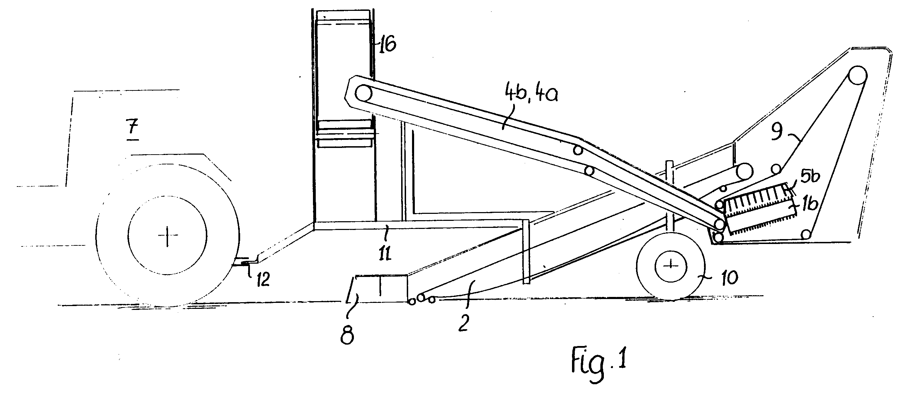

- Figur 1 -: eine schematische Seitenansicht der Kartoffelerntemaschine hinter einem Schlepper,

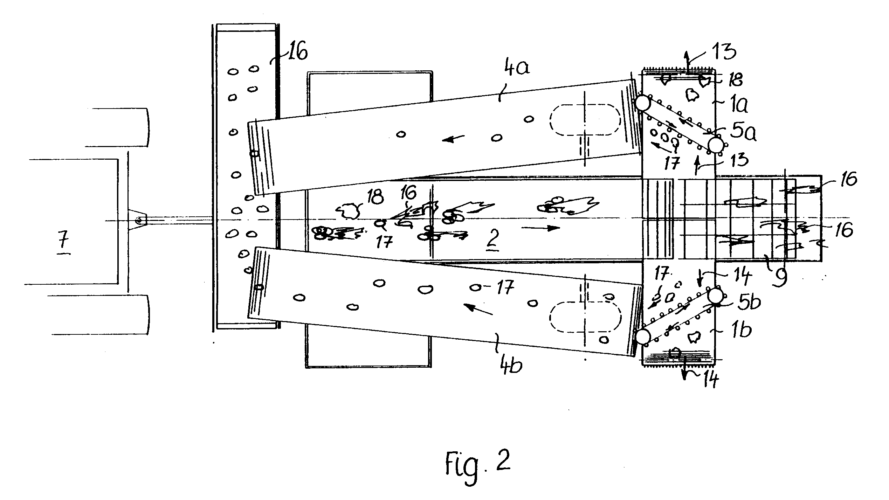

- Figur 2 -: eine schematische Draufsicht auf die Kartoffelerntemaschine gemäß Figur 1,
- Figur 3 -: eine schematische Rückansicht einer ersten Ausführungsform der Trennbandabschnitte,
- Figur 4 -: eine Draufsicht auf die Anordnung gemäß Figur 3,
- Figur 5 -: eine schematische Rückansicht einer zweiten Ausführungsform der Trennbandabschnitte,
- Figur 6 -: eine Draufsicht auf die Anordnung gemäß Figur 5.

An einem Schlepper 7 ist über eine Schlepperkupplung 12 die Kartoffelerntemaschine angehängt. Sie besitzt einen schematisch dargestellten Rahmen 11 mit zwei Laufrädern 10. An eine Schwadaufnahme 8 schließt sich eine von vorn nach hinten ansteigend angeordnete Sieb- und Förderkette 2 an, die in der Mitte der Maschine verläuft. Die Sieb- und Förderkette wirft das am Ende ihres Förderwegs noch aufliegende Gut auf die sich anschließende grobmaschige Krautkette 9,die in der Verlängerung der Sieb- und Förderkette 2 von vorn nach hinten umläuft. Die Krautkette 9 umschließt zwei unterhalb des hinteren Endes der Sieb- und Förderkette angeordnete Trennbandabschnitte 1b und 1a, deren obere Trums jeweils zu unterschiedlichen Seiten fördern, wie dies durch die Pfeile 13 und 14 symbolisiert ist. Das Kartoffelkraut 16 wird über die grobmaschige Krautkette 9 nach hinten abgeworfen. Kartoffeln 17 und Beimengungen 18, beispielsweise Steine, gelangen auf die Trennbandabschnitte 1a und 1b. Die Trennung in Kartoffeln 17 und Beimengungen 18 erfolgt einerseits durch die Form und Anordnung der Trennbandabschnitte, andererseits durch die Abstreifvorrichtungen 5a und 5b. Diese Abstreifvorrichtungen sind in der Draufsicht von vorne nach hinten zur Mitte geneigt angeordnet. Die Mitnehmer 6 der Abstreifvorrichtungen 5a und 5b sind an umlaufenden Riemen oder dergleichen angeordnet. Die jeweils innere Reihe der Abstreifer läuft von vorne schräg nach hinten. Hierdurch wird eine besonders gute Trennung erreicht. Die Kartoffeln rollen über die von hinten nach vorn abfallend angeordneten Trennbandabschnitte nach vorn und gelangen auf die beiden sich von hinten nach vorn ansteigend erstreckenden Förder- und Verlesebänder 4a und 4b. Die Verlesebänder, die in Draufsicht nach vorne V-förmig zusammenlaufend angeordnet sind, werfen die Kartoffeln entweder auf das dargestellte Überladeband 16 ab oder fördern die Kartoffeln in einen nicht dargestellten Vorratsbunker.

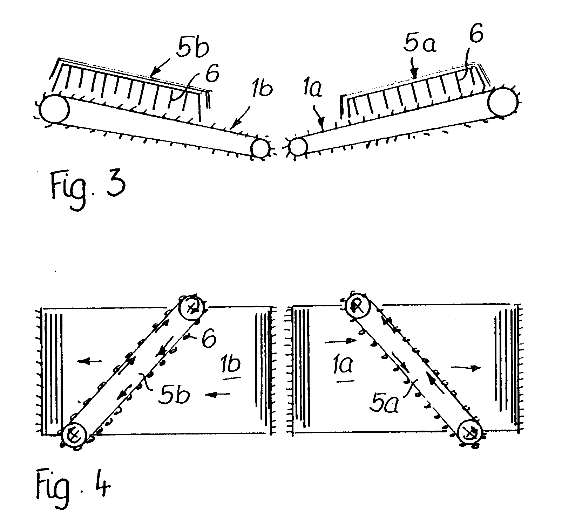

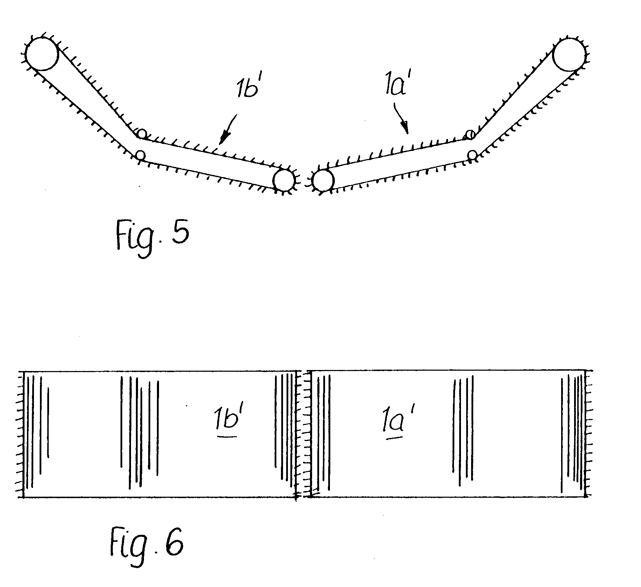

Bei der Ausführungsform gemäß Figuren 3 und 4 verlaufen die Trums der beiden Trennbandabschnitte 1a und 1b geradlinig. Bei der Ausführungsform gemäß Figuren 5 und 6 sind die Trums der Trennbandabschnitte 1b' und 1a' etwa in deren

Mitte nach oben abgeknickt. Hierdurch wird die Trennwirkung der Trennbandabschnitte in bestimmten Erntesituationen verbessert.

## Patentansprüche

1. Kartoffelerntemaschine mit einer im Anschluß an eine Schwadaufnahmeeinrichtung (8) nach hinten verlaufenden, ansteigenden Sieb- und Förderkette (2), ferner mit einer der Sieb- und Förderkette nachgeschalteten Krautkette (9), deren oberes Trum ebenfalls nach hinten aufsteigend umläuft, wobei die Krautkette ein quer verlaufendes Trennband umläuft, das Schmutz und Kraut zur Seite fördert und die Kartoffeln auf ein nach vorne verlaufendes Förder- und Verleseband (4a; 4b) übergibt, das die Kartoffeln in einen Sammelbehälter oder auf ein Abführband (16) transportiert, wobei das Trennband aus zwei gegenläufigen, von der Mitte zu den Seiten fördernden Trennbandabschnitten (1a; 1b) besteht, die zum Abwurf der Beimengungen zu unterschiedlichen Seiten der Maschine und zur Übergabe der Kartoffeln auf jeweils sich anschließende, von hinten nach vorn verlaufende Förder- und Verlesebänder (4a; 4b) ausgebildet sind,
dadurch gekennzeichnet,
daß jedem Trennbandabschnitt (1a; 1b) eine oberhalb des Trennbandes angeordnete Abstreifvorrichtung (5a; 5b) zugeordnet ist, welche zwei Reihen von umlaufend angeordneten Mitnehmern (6) aufweist, deren zur Maschinenmitte weisende Reihe in Draufsicht schräg von vorn außen nach hinten innen bewegt wird.

2. Kartoffelerntemaschine nach Anspruch 1,
dadurch gekennzeichnet,
daß sowohl das Trennband (1a; 1b) als auch die Abstreifvorrichtung (5a; 5b) in der Seitenansicht in Richtung auf das hintere Ende der Kartoffelerntemaschine ansteigend geneigt sind.

3. Kartoffelerntemaschine nach Anspruch 2,
dadurch gekennzeichnet,
daß die Neigung der Abstreifvorrichtung (5a; 5b) und des Trennbands (1a; 1b) im wesentlichen gleich sind.

4. Kartoffelerntemaschine nach einem oder mehreren der Ansprüche 1 bis 3,
dadurch gekennzeichnet,
daß die fördernden Trums der Trennbandabschnitte (1a; 1b) zu den Seiten hin ansteigend angeordnet sind.

5. Kartoffelerntemaschine nach einem oder mehreren der Ansprüche 1 bis 4,
dadurch gekennzeichnet,
daß die fördernden Trums der Trennbandabschnitte (1a; 1b) an der Maschinenseite stärker ansteigend angeordnet sind als in der Maschinenmitte.

## Claims

1. Potato harvester with a rising open-web conveyor chain (2) running backwards from a swathe pick-up device (8), with a haulm chain (9) connected to the outlet of the open-web conveyor chain wherein the upper side of the haulm chain likewise rotates rising up towards the back; the haulm chain revolves round a transversely running separating belt which moves dirt and haulm to the side and transfers the potatoes onto a conveyor sorting table (4a;4b) which runs forwards and moves the potatoes into a collecting hopper or onto a discharge belt (16) wherein the separating belt consists of two contra-rotating belt sections (1a;1b) which move away from the centre to the sides and which are designed for discharging the trash to different sides of the machine and for transferring the potatoes to each adjoining conveyor sorting table (4a;4b) which runs from the back to the front, characterised in that each separating belt section (1a;1b) is associated with a stripper device (5a;5b) which is mounted above the separating belt and has two rows of revolving entrainment members (6) of which the row pointing towards the centre of the machine is moved in plan view inclined from the front outside inwards to the back.

2. Potato harvester according to claim 1 characterised in that both the separating belt (1a;1b) and the stripper device (5a;5b) are inclined rising in side view towards the rear end of the potato harvester.

3. Potato harvester according to claim 2 characterised in that the incline of the stripper device (5a;5b) and that of the separating belt (1a;1b) are substantially the same.

4. Potato harvester according to one or more of claims 1 to 3 characterised in that the conveying sides of the separating belt sections (1a;1b) are arranged rising towards the sides.

5. Potato harvester according to one or more of claims 1 to 4 characterised in that the conveying sides of the separating belt sections (1a;1b) are arranged rising more sharply at the side of the machine than in the centre of same.

## Revendications

1. Récolteuse de pommes de terre avec une chaîne de criblage et de transport ascendante (2) s'étendant vers l'arrière et faisant suite à un dispositif de ramassage de verts (8), et avec une chaînes de verts (9), montée en en aval de la chaîne de criblage et de transport, dont le bout supérieur s'élève à l'arrière, la chaîne de verts contournant une bande séparatrice transversale qui transporte les impuretés et les verts sur le côté et décharge les pommes de terre sur une bande de transport et de triage (4a; 4b) s'étendant vers l'avant, laquelle conduit les pommes de terre dans un collecteur ou sur une bande d'évacuation (16), la bande séparatrice étant composée de deux parties (1a; 1b) à marche contraire, convoyant du centre vers les côtés et conçues en vue de rejeter les déchets sur les différents côtés de la machine et de conduire les pommes de terre sur des bandes de transport et de triage (4a; 4b) se déplaçant d'arrière en avant,
caractérisé en ce que
des dispositifs de raclage (5a; 5b) sont coordonnés chacun à une partie (1a; 1b) de la bande séparatrice et présentent deux rangées d'entraîneurs (6), la rangée dirigée vers le centre de la machine étant mobile à l'intérieur, de l'avant vers l'arrière, obliquement vue de dessus.

2. Récolteuse de pommes de terre selon la revendication 1,
caractérisée en ce que
la bande séparatrice (1a; 1b) de même que le dispositif de raclage (5a; 5b) sont inclinés, vus latéralement, en pente ascendante en direction de l'extrémité arrière de la récolteuse de pommes de terre.

3. Récolteuse de pommes de terre selon la revendication 2,
caractérisée en ce que
la pente du dispositif de raclage (5a; 5b) et celle de la bande séparatrice (1a; 1b) sont en grande partie égales.

4. Récolteuse de pommes de terre selon l'une ou plusieurs des revendications 1 à 3,
caractérisée en ce que
les bouts transporteurs des parties (1a; 1b) de la bande séparatrice sont disposés en s'élevant vers les côtés.

5. Récolteuse de pommes de terre selon l'une ou plusieurs des revendications 1 à 4,
caractérisée en ce que
les bouts transporteurs des parties (1a; 1b) de la bande séparatrice sont disposés en pente ascendante plus forte vers les côtés de la machine qu'au centre de celle-ci.
